Europäisches Patentamt

(19) European Patent Office

Office européen des brevets

(11) EP 0 599 830 B1

## (12) EUROPEAN PATENT SPECIFICATION

(45) Date of publication and mention
of the grant of the patent:
**20.03.1996 Bulletin 1996/12**

(21) Application number: **91913383.5**

(22) Date of filing: **07.08.1991**

(51) Int. Cl.⁶: **A23G 1/00**

(86) International application number: **PCT/BE91/00056**

(87) International publication number:
**WO 93/02566 (18.02.1993 Gazette 1993/05)**

(54) **REDUCED CALORIE CHOCOLATE COMPOSITIONS**

KALORIENARME SCHOKOLADE-ZUSAMMENSETZUNG

COMPOSITIONS HYPOCALORIQUES DE CHOCOLAT

(84) Designated Contracting States:
**AT BE CH DE DK ES FR GB GR IT LI LU NL SE**

(43) Date of publication of application:
**08.06.1994 Bulletin 1994/23**

(73) Proprietor: **RAFFINERIE TIRLEMONTOISE**
**B-1150 Bruxelles (BE)**

(72) Inventors:
• **DE SOETE, Johan**
**B-3360 Korbeek-Lo (BE)**
• **FREUND, Dietmar**
**D-4750 Unna (DE)**

(74) Representative: **Van Malderen, Michel et al**
**Office van Malderen**
**Place Reine Fabiola 6/1**
**B-1080 Bruxelles (BE)**

(56) References cited:
**EP-A- 0 268 974**      **EP-A- 0 307 523**
**BE-A- 903 926**      **GB-A- 2 072 679**
**US-A- 3 800 036**      **US-A- 4 276 379**
**US-A- 4 283 432**      **US-A- 4 564 525**

Remarks:
The file contains technical information submitted after the application was filed and not included in this specification

## Description

### Field of the invention

The invention pertains to a reduced calorie chocolate composition which possibly may also have a reduced digestible fat content.

### Background of the invention

The present sedentary way of life of many people in which the physical work has almost disappeared, has considerably modified the food requirements. Today, although we need less energetic foodstuff, we still eat too much lipids, too much salt, and not enough fibers.

The lack of fibers in the diet seems to be the cause of many disturbances of the digestive system.

Because of their high fat and sugar contents, the chocolate confections are good examples of food products with a high calorie value per unit weight with almost no fibers and a high lipidic content.

Confectionery chocolate compositions generally comprise about 30-60% sugar (sucrose; fructose; polyols, preferably sugar alcohols such as sorbitol, xylitol, isomalt, maltitol, mannitol, erythritol, galactitol, lactitol; isomaltulose; polyglucose; Polydextrose®; polymaltose; carboxymethylcellulose; carboxyethylcellulose; arabinogalactan; microcristalline cellulose or a mixture thereof), 0-70% chocolate liquor (which contains about 50% cocoa butter), 10-40% added cocoa butter and about 1% flavor and miscellaneous ingredients.

The consumers are becoming more aware of the relation existing between their nutrition and health. Consequently, there is a significant need for chocolate confectionery compositions that can find a place in a well balanced diet and yet which provide the gustatory and physical properties of conventional chocolate confectionery compositions. In addition, there is also a need for chocolate confectionery compositions that have reduced sugar content in order to reduce the cariogenic effect and in order to reduce the glycemic effects for diabetics. Further to food for diabetics, such compositions could also be used in diets for particular nutrition such as: food for obese persons and for children.

Such chocolate compositions should preferably have:

- a reduced calorie content
- a reduced fat content
- an increased fiber content
- a beneficial effect on the intestinal metabolism
- a reduced sugar content
- reduced cariogenic properties.

The U.S. Patent No. 3,800,036 describes fat free or low fat frozen desserts.

As one example of these, a frozen dessert with a taste of chocolate is described (col. 4, line 57).

The Belgian patent No. 903,926 describes low cariogenic confectionery products comprising a mixture of yeast, monosaccharides, dissacharides and polysaccharides.

U.S. Patent No. 3 876 794, Rennhard, April 8, 1975, discloses certain polyglucoses and polymaltoses commercially named "Polydextrose" which can be used as non-caloric bulking agents to replace sugar and part of the fat in artificially sweetened foods. A chocolate confectionery composition is disclosed in Example XXVII.

The commercial product "Polydextrose" is marked by a bitter aftertaste which limits its use in many applications.

In the European Patent Application EP-A1 0 285 187, in the name of The Procter & Gamble Company, published on October 5, 1988 a reduced calorie chocolate confectionery composition is disclosed in which sucrose polyesters or polyethers of sucrose are used as a substitute for fat, and in which sugar is replaced by a non-caloric sweetener with or without a partially or wholly non digestible reduced caloric carbohydrate bulking agent.

Other applications are known in which the sugar is replaced by polyols, preferably sugar alcohols such as sorbitol, xylitol, lactitol, isomalt, maltitol, mannitol, erythritol, galactitol,... However, there are some technological disadvantages linked to the use of these sugar replacers in chocolate compositions. In the case of isomalt, lactitol and sorbitol, high water content of the chocolate mass makes it necessary to adapt the production process significantly, often with important process delays as a consequence. Also, the compounds like sorbitol, xylitol and maltitol are absorbed and metabolized in the human body to a large extent and hence it is difficult to use these as reduced calorie bulking agents.

Also, the acceptability of these sugar and fat replacers is in many cases low: fat replacers are known to cause laxation and even anal leakage, and most sugar alcohols provoke laxative diarrhea when ingested in high amounts.

Accordingly the main object of the present invention is to provide chocolate compositions with reduced calorie content combined with a fiber-effect using ingredients of natural origin and composition, with excellent taste, with beneficial nutritional properties and which can easily be produced.

Another object of the invention is to provide chocolate compositions having improved properties for the health of the consumer, such as the promotion of the proliferation of beneficial intestinal flora (Bifidobacterium species in particular), the reduction of cholesterol levels in the body and the reduction of the cariogenicity.

Another object of the invention is to provide chocolate compositions which can be used by diabetics.

### Detailed description of the invention

In accordance with the present invention it has been found that reduced calorie, and possibly reduced fat chocolate compositions which are highly acceptable can be prepared in which the sugar is wholly or partially replaced by a product selected from the group consisting of inulin, branched inulin, linear fructo-oligosaccharides, branched fructo-oligosaccharides or a mixture thereof, with possibly a high-intensity sweetener.

According to a particular embodiment of the present invention, a reduced calorie chocolate composition is provided which comprises:

(a) from about 5% to about 56% of a source of cocoa, selected from cocoa liquor or cocoa butter;
(b) from about 1% to about 60% of a product selected from the group consisting of linear inulin, branched inulin, linear fructo-oligosaccharides, branched fructo-oligosaccharides or a mixture thereof;
(c) from 0% to about 55% of a product selected from the group consisting of sucrose, fructose, polyols, preferably sugar alcohols such as sorbitol, xylitol, isomalt, maltitol, mannitol, erythritol, galactitol, lactitol; isomaltulose; polyglucose; Polydextrose®; polymaltose; carboxymethylcellulose; carboxyethylcellulose; arabinogalactan; microcristalline cellulose or a mixture thereof;
(d) from 0% to about 1% of a high-intensity sweetener and/or flavor agent and/or other miscellaneous ingredients;
(e) from 0% to about 65% of non-digestible chocolate confectionery fat substitute.

All percentages herein are "by weight" unless otherwise specified. The total of the ingredients in the composition is of course 100%.

Fat substitutes have been described in the published European patent application EP-A1-0 285 187 in the name of the Procter & Gamble Company.

The chocolate confectionery fat substitute in the compositions of the invention can be non-digestible fatty polyesters or polyethers which has a clear (i.e. complete) melting point of 30-36°C and SCI (Solids Content Index) of at least 66 at a temperature of 6.6°C below the clear melting point. Preferably, the ester has an SCI of at least 40 at a temperature which is 3.3°C below its clear melting point.

A wide variety of fatty polyesters and polyethers have been reported in the literature as being suitable as non-digestible substitutes for fat (i.e. triglyceride fat). The fatty moieties typically have carbon chain lengths of 8-24 carbon atoms. Examples of such materials are: fatty alcohol esters of polycarboxylic acids (U.S. Pat. No. 4 508 746, Hamm. issued April 2, 1985); fatty polyethers of polyglycerol (U.S. Pat. No. 3 932 532, Hunter et al., issued Jan. 13, 1976 - food used disclosed in East German Pat. 207 070 issued Feb. 15, 1984); ethers and etheresters of polyols containing the neopentyl moiety (U.S. Pat. No. 2 962 419, Minich. issued Nov. 29, 1960); fatty alcohol diesters of dicarboxylic acids such as malonic and succinic acid (U.S. Pat. 4 582 927, Fulcher, issued April 15, 1986); and triglyceride esters of alpha branched chain alkyl carboxylic acids (U.S. 3 579 548, Whyte, issued May 18, 1971.

The non-digestible fatty polyesters and polyethers provide bulk and structure, as well as mouth feel to the compositions, and therefore can be used as a partial replacement for sugar, as well as being a replacement for fat.

In accordance with a specific embodiment of the present invention where a mixture of inulin and fructo-oligosaccharides is used, the ratio of inulin to fructo-oligosaccharide may vary between $\frac{1}{100}$ and $\frac{100}{1}$, preferably $\frac{1}{10}$ and $\frac{10}{1}$.

The use of such a mixture is particularly interesting in view of the fact that it combines a good fiber-effect with a good promotion of the intestinal flora proliferation.

The cocoa material used in the compositions of the present invention can be any of the chocolate liquors or cocoa powders used in the preparation of chocolate confections. Chocolate liquor typically contains about 50% natural cocoa butter. Cocoa powders typically contain from about 5% to about 30% natural cocoa butter. In order to obtain maximum fat and calorie reduction in the compositions of the present invention, low cocoa butter content cocoa powders are preferred.

The linear inulin used in the present invention is a readily available and low-cost material that can be derived from Helianthus tuberosus or Cichorium intybus widely distributed over the world.

The linear inulin, possibly after partial hydrolysis, can also be treated enzymatically in presence of sucrose to obtain branched inulin.

The fructo-oligosaccharides as used in the present invention can be obtained by chemical or enzymatic process from saccharose, fructose, inulin, fructans, levans, or a mixture thereof, from their products of hydrolysis, or from products obtained from plants containing fructans.

Preferably, the linear fructo-oligosaccharides according to the invention are obtained by fructosyltransferase reaction on sucrose.

Products of that nature have been described in the U.S. Patent n° 4 276 379 in the name of Heady (CPC International Inc).

The linear fructo-oligosaccharides can be also easily manufactured on an industrial basis by hydrolysis of inulin.

This process produces linear fructo-oligosaccharides in which at least one fructose unit is bound to a fructose or sucrose unit by a β 1-2 linkage. Preferred compounds are those having less than a total of 2 and preferably less than 9 fructose units.

The branched fructo-oligosaccharides as used in the present invention can be obtained by chemical or enzymatic process from saccharose, fructose, fructans, levans, inulin or a mixture thereof, from their products of hydrolysis, or from products obtained from plants containing fructans, by hydrolysis of branched levans, inulin or fructans or by using micro-organisms which produce branched fructo-oligosaccharides, using sucrose as raw material, as described in the European patent application EP-0307158 in the name of Nihon Shokuhin Ltd.

Reducing terminal groups can further be chemically transformed, like for instance by oxidation, by reduction or by hydrogenation,...

Preferred branched fructo-oligosaccharides are constituted by a principal chain comprising from 2 to 15 units, preferably made up of fructose units, upon which one or several, branched or not branched, lateral chains are attached.

Preferred lateral chains comprise from 1 to 15 units, preferably made up of fructose units.

Products of that nature have been described in the co-pending International Patent application n° PCT/BE91/00014 in the name of Raffinerie Tirlemontoise.

Additionally, fructose polymers have also been described in the following documents:

- in the Indian Journal of Biochemistry & Biophysics (vol. 13, Dec. 1976, pp. 398-410), and in Liebigs Annalen der Chemie [614, 126, (1958)], Satyanarayana and Schlubach have described branched oligosaccharides which can be found in small amount in the nature;
- in Liebigs Annalen der Chemie [635, 154 (1959)], Schlubach has also described natural products constituted by polymeric branched fructose units which can be obtained naturally in large amount;
- in Carbohydrate Research [180, p. 315-324 (1988)], Brasch and al. have described a fructose polymer (chain length of 18 units) in which 15% of the fructose units comprise a ramification in position 0-6. However, with their too long chain length, these molecules do not constitute an appropriate bulking agent.

The inulin and the fructo-oligosaccharides used in the composition according to the invention are known to have the following advantages:

- they are of natural origin and their occurrence in the normal Western diet is relatively high: they are present in large amounts in common vegetables such as onions, leek, garlic, artichokes,...
- they are "dietary fibers" by definition and because of their properties: they have shown to have different "dietary fiber effects" such as the increase of the stool weight, the decrease of the intestinal transit time, the lowering of blood lipids and serum cholesterol, the decrease of intestinal pH,...;
- they are not absorbed or hydrolysed in the small intestine and hence they are low calorie products;
- they have a specific Bifidus-stimulating effect: the intake of oligosaccharides of the inulin series has shown to promote specifically the beneficial intestinal bacteria such as Bifidobacterium sp. and Lactobacillus sp. and to inhibit the development of putrefactive bacteria;
- their acceptability is better than the acceptability of most sugar alcohols due to a lower laxative effect;
- they have excellent taste profile.

Inulin is known and used as a dietary fiber in many food products already. Inulin has low water solubility and is not a pure crystalline product. Its technological properties are quite different from those of sucrose.

Since inulin is a dietary fiber, its use may have been considered also for chocolate products. In these cases, inulin was never considered as a total sugar replacer, but rather as a "dietary fiber" supplement in small quantities.

Therefore, it was not obvious to substitute all sugar by inulin in chocolate products. We have now found out that inulin can be used as a perfect sugar replacer in chocolate products. Not only has inulin excellent nutritional properties, but the process for preparing the chocolate compositions according to the invention is also new. In fact, inulin can be used instead of sugar by adapting the conching parameters: total conching time is increased by 30% compared to conventional chocolate.

In accordance with a specific embodiment of the present invention, the reduced calorie and possibly reduced fat chocolate composition intended for diabetic consumers, comprises 0% of sucrose.

According to a preferred mode of execution of the invention for a chocolate composition intended for diabetic consumers, the product selected from the group consisting of linear inulin, branched inulin, linear fructo-oligosaccharides, branched oligosaccharides or a mixture thereof, is purified by removing its sucrose fraction.

The artificial sweeteners to be used in the compositions of the invention can be any of those known for use in food products. Examples include saccharin, cyclamate, acesulfame K (Americal Hoechst), Gem Sweet (Cumberland Packing Corp.), L-sugars (Lev-O-Cal, Biospherics), Hernandulcin (University of Illinois), Alitame (Pfizer), Thaumatins, trichloro sucrose, Rebaudioside A, L-aspartyl-L-phenylalanine methyl ester, aspartyl-D-valine isopropyl ester, aspartyl amino malonates, dialkyl aspartyl aspartates, stevioside, glycyrrhizin, p-phenetylurea, 5-nitro-2 propoxyaniline and neohesperidin dihydrochalcone. The term L-aspartyl-L-phenylalanine methyl ester and methyl L-aspartyl-L-phenylalanine were used interchangeably and correspond to the compound also known as aspartame. Preferred artificial sweeteners are saccharin, cyclamate, L-aspartyl phenylalanine methyl ester and acesulfame K.

Materials which are customarily used in formulating chocolate confectionery compositions can be included in the compositions herein. For example if it is desired to formulate the composition of this invention as a milk chocolate, from about 10% to 20% whole or non-fat milk solids can be included. Other optional ingredients include any natural food flavoring oil, oleoresin or extract, artificial food flavorings, ground spice, ground coffee, ground nut meats, ground vanilla beans, dried malted cereal extract, salt dietary fiber sources such as cocoa fiber, citrus fiber, wheat bran, corn bran, oat bran, pea bran and soy fiber, lecithin, and other emulsifying ingredients at levels conventionally used in chocolate confections.

Also, if desired, some sugar such as polyols, preferably sugar alcohols such as sorbitol, xylitol, isomalt, maltitol, mannitol, erythritol, galactitol, lactitol; isomaltulose; polyglucose; Polydextrose®; polymaltose; carboxymethylcellulose; carboxyethylcellulose; arabinogalactan; microcristalline cellulose; honey molasses; maple sugar; brown sugar or a mixture thereof may be included in the composition, in which case the amount of the other carbohydrates are proportionately reduced.

If desired, a combination of natural confectionery fats and confectionery fat substitutes can be used in compositions of the invention.

Non-digestible fatty esters can interfere with the body's uptake of fat-soluble vitamins, but it has been found that this problem can be overcome by fortifying foods containing such esters with fat soluble vitamins such as Vitamins A, E, D and K (see U.S. Pat. No. 4,034,083 Mattson, issued July 5, 1977). Accordingly, fat-soluble vitamins are desirable additives for the present compositions.

The invention will be further illustrated by the following examples:

### Example I:

Preparation of a reduced calorie dark chocolate with the following composition

| Ingredients | % |
|---|---|
| Inulin | 44 |
| Cocoa liquor | 46 |
| Cocoa butter | 9,47 |
| Vanilla | 0,03 |
| Lecithin and acesulfame K | 0,5 |

The ingredients inulin and cocoa liquor are mixed for about 10 minutes at the temperature of 40°C.

After mixing, the resulting paste is passed through a mill (with five steel rollers) and converted to a powdery mass with a thinness of 20 μm.

After milling, the chocolate is subjected to conching during 24 hours in two phases:

- the dry phase during 5 hours at the temperature of 55°C;
- the liquid phase of plastification during 17 hours at the temperature of 65°C;

- the cocoa butter is added after 22 hours. The lecithin and the acesulfame K are added after 23 hours with 1 hour of mixing. The temperage is then done on a Sollich-turbo-temper® at 45, 27,5 and 29°C.

Chocolate of example I has been submitted to a sensoric evaluation panel. The taste, texture and appearance are evaluated. The taste is excellent, the texture is comparable to a dark chocolate with sucrose; the appearance is similar to dark chocolate with sucrose.

The caloric value for the chocolate of example 1 has been calculated: the caloric value is: 398 kcal/100 g; the caloric value for dark chocolate with sucrose is 530 kcal/100 g. The caloric reduction for dark chocolate with inulin is: 25%.

### Example II:

Preparation of a reduced calorie milk chocolate with the following composition

| Ingredients | % |
|---|---|
| Inulin | 42 |
| Milk powder | 18 |
| Cocoa liquor | 14,44 |
| Hazelnut-paste | 4 |
| Cocoa butter | 21 |
| Vanilla | 0,06 |
| Lecithin and acesulfame K | 0,5 |

The ingredients (inulin, milk powder, cocoa liquor, hazelnut-paste and half of the cocoa butter) are mixed as described in Example I. The liquid phase of plastification is done at the temperature of 60°C and the temperage is done at 45, 27 and 28,5°C.

## Example III

Preparation of a reduced calorie dark chocolate with the following composition

| Ingredients | % |
|---|---|
| Oligofructose | 44 |
| Cocoa liquor | 46 |
| Cocoa butter | 9,47 |
| Vanilla | 0,03 |
| Lecithin and acesulfame K | 0,5 |

The ingredients (oligofructose and cocoa liquor) are mixed as described in Example I. The temperage is done at 45, 27,5 and 29°C.

## Example IV:

Preparation of a reduced calorie milk chocolate with the following composition

| Ingredients | % |
|---|---|
| Oligofructose | 42 |
| Milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients are mixed as described in Example I. The liquid phase of plastification is done at the temperature of 60°C and temperage is done at 45, 27 and 28,5°C.

## Example V:

Preparation of a reduced calorie dark chocolate with the following composition

| Ingredients | % |
|---|---|
| Inulin | 22 |
| Saccharose | 22 |
| Cocoa liquor | 46 |
| Cocoa butter | 9,47 |
| Vanilla | 0,03 |
| Lecithin and aspartame | 0,5 |

The ingredients are mixed as described in Example I. The temperage is done at 45, 27,5 and 29°C.

## Example VI:

Preparation of a reduced calorie dark chocolate with the following composition

| Ingredients | % |
|---|---|
| Oligofructose | 35 |
| Inulin | 7 |
| Cocoa liquor | 46 |
| Cocoa butter | 9,47 |
| Vanilla | 0,03 |
| Lecithin and acesulfame K | 0,5 |

The ingredients are mixed as described in Example I. The temperage is done at 45, 27,5 and 29°C.

### Example VII:

Preparation of a reduced calorie milk chocolate with the following composition

| Ingredients | % |
|---|---|
| Oligofructose | 8 |
| Inulin | 34 |
| Milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients are mixed as described in Example I. The liquid phase of plastification is done at the temperature of 60°C and the temperage is done at 45, 27 and 28,5°C.

### Example VIII:

Preparation of a reduced calorie dark chocolate with the following composition

| Ingredients | % |
|---|---|
| Branched inulin | 39 |
| Fructose | 5 |
| Cocoa liquor | 46 |
| Cocoa butter | 9,47 |
| Vanilla | 0,03 |
| Lecithin and acesulfame K | 0,5 |

The ingredients (branched inulin, cocoa liquor, and half of the cocoa butter) are mixed as described in Example I. The liquid phase of plastification is done at the temperature of 60°C and the temperage is done at 45, 27 and 28,5°C.

### Example IX:

Preparation of a reduced calorie milk chocolate with the following composition

| Ingredients | % |
|---|---|
| Inulin | 42 |
| Lactose-free milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients (inulin, milk powder, cocoa liquor, hazelnut-paste and half of the cocoa butter) are mixed as described in Example I.

The liquid phase of plastification is done at the temperature of 60°C and the temperage is done at 45, 27 and 28,5°C.

### Example X:

Preparation of a reduced calorie dark chocolate with the following composition

| Ingredients | % |
|---|---|
| Branched oligofructose | 44 |
| Cocoa liquor | 46 |
| Cocoa butter | 9,47 |
| Vanilla | 0,03 |
| Lecithin and acesulfame K | 0,5 |

The ingredients (branched oligofructose and cocoa liquor) are mixed as described in Example I. The temperage is done at 45, 27,5 and 29°C.

## Example XI:

Preparation of a reduced calorie milk chocolate with the following composition

| Ingredients | % |
|---|---|
| Branched oligofructose | 42 |
| Milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients are mixed as described in Example I. The liquid phase of plastification is done at the temperature of 60°C and temperage is done at 45, 27 and 28,5°C.

## Example XII:

Preparation of a reduced calorie dark chocolate with the following composition

| Ingredients | % |
|---|---|
| Branched Oligofructose | 35 |
| Branched inulin | 7 |
| Cocoa liquor | 46 |
| Cocoa butter | 9,47 |
| Vanilla | 0,03 |
| Lecithin and acesulfame K | 0,5 |

The ingredients are mixed as described in Example I. The temperage is done at 45, 27,5 and 29°C.

## Example VII:

Preparation of a reduced calorie milk chocolate with the following composition

| Ingredients | % |
|---|---|
| Branched oligofructose | 8 |
| Inulin | 34 |
| Milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients are mixed as described in Example I. The liquid phase of plastification is done at the temperature of 60°C and the temperage is done at 45, 27 and 28,5°C.

The invention will be further illustrated by the following examples:

## Example XIV:

Preparation of a reduced calorie dark chocolate with the following composition

| Ingredients | % |
|---|---|
| Inulin, from which sucrose was removed | 44 |
| Cocoa liquor | 46 |
| Cocoa butter | 9,47 |
| Vanilla | 0,03 |
| Lecithin and acesulfame K | 0,5 |

The ingredients inulin and cocoa liquor are mixed as in example 1. Temperage is done at 45, 27,5 and 29°C.

## Example XV:

Preparation of a reduced calorie dark chocolate with the following composition

| Ingredients | % |
| --- | --- |
| Oligofructose | 44 |
| Fructose | 4 |
| Cocoa liquor | 46 |
| Cocoa butter | 9,47 |
| Vanilla | 0,03 |
| Lecithin and acesulfame K | 0,5 |

The ingredients (oligofructose, fructose, and cocoa liquor) are mixed as described in Example I. The temperage is done at 45, 27,5 and 29°C.

## Example XVI

Preparation of a reduced calorie milk chocolate with the following composition

| Ingredients | % |
| --- | --- |
| Branched oligofructose | 42 |
| Milk powder | 18 |
| Cocoa liquor | 14,44 |
| Hazelnut-paste | 4 |
| Cocoa butter | 21 |
| Vanilla | 0,06 |
| Lecithin and aspartame | 0,5 |

The ingredients are mixed as described in Example I. The liquid phase of plastification is done at the temperature of 60°C and temperage is done at 45, 27 and 28,5°C.

The present invention within its scope covers also a process for preparing reduced calorie chocolate compositions consisting in admixing usual ingredients for chocolate wherein the usual sugar is wholly or partially replaced by a product selected from the group consisting of inulin, branched inulin, linear fructo-oligosaccharides, branched fructo-oligosaccharides or a mixture thereof, with possibly a high-intensity sweetener as well as the use of products selected from said group for preparing reduced calorie chocolate confectionery, more particularly as hereinbefore described.

## Claims

1.  A reduced calorie chocolate composition in which the sugar is wholly or partially replaced by a product selected from the group consisting of inulin, branched inulin, linear fructo-oligosaccharides, branched fructo-oligosaccharides or a mixture thereof, with possibly a high-intensity sweetener

2.  Reduced calorie chocolate composition comprising:

    (a) from about 5% to about 56% of a source of cocoa, selected from cocoa liquor or cocoa butter;
    (b) from about 1% to about 60% of a product selected from the group consisting of linear inulin, branched inulin, linear fructo-oligosaccharides, branched fructo-oligosaccharides or a mixture thereof;
    (c) from 0% to about 55% of a product selected from the group consisting of sucrose, fructose, polyols, preferably sugar alcohols such as sorbitol, xylitol, isomalt, maltitol, mannitol, erythritol, galactitol, lactitol; isomaltulose; polyglucose; Polydextrose®; polymaltose; carboxymethylcellulose; carboxyethylcellulose; arabinogalactan; microcristalline cellulose or a mixture thereof or a mixture thereof;
    (d) from 0% to about 1% of a high-intensity sweetener and/or flavor agent and/or other miscellaneous ingredients;
    (e) from 0% to about 65% of non-digestible chocolate confectionery fat substitute.

3.  The composition of claim 2, wherein the ratio of inulin to fructo-oligosaccharide may vary between $\frac{1}{100}$ and $\frac{100}{1}$, preferably $\frac{1}{10}$ and $\frac{10}{1}$.

4.  The composition of claim 2, wherein branched inulin is obtained, possibly after a partial hydrolysis of linear inulin, by levansucrase reaction on linear inulin, in the presence of sucrose.

5.  The composition of claim 2, wherein the fructo-oligosaccharides are obtained by chemical or enzymatic process from saccharose, fructose, fructans, levans, from their products of hydrolysis, or from products obtained from plants containing fructans.

6.  The composition of claim 2, wherein the linear fructo-oligosaccharides are obtained by fructosyl transferase reaction on sucrose.

7.  The composition of claim 2, wherein the linear fructo-oligosaccharides are obtained by the hydrolysis of inulin.

8. The composition of claim 2, wherein the linear fructo-oligosaccharides are constituted by compounds having less than a total of 20, preferably less than 9 fructose units.

9. The composition of claim 2, wherein the branched fructo-oligosaccharides are constituted by a principal chain comprising from 2 to 15 units, preferably made up of fructose units; upon which one or several, branched or not branched, lateral chains are attached.

10. The composition of claim 9, wherein the lateral chains comprise from 1 to 15 units, preferably made up of fructose units.

11. The composition of claim 2 intended for diabetic consumers, comprising 0% of sucrose.

12. The composition of claim 2 intended for diabetic consumers, wherein, the product selected from the group consisting of linear inulin, branched inulin, linear fructo-oligosaccharides, branched fructo-oligosaccharides or a mixture thereof, is purified by removing its sucrose fraction.

13. Process for preparing reduced calorie chocolate compositions consisting in admixing usual ingredients for chocolate wherein the usual sugar is wholly or partially replaced by a product selected from the group consisting of inulin, branched inulin, linear fructo-oligosaccharides, branched fructo-oligosaccharides or a mixture thereof, with possibly a high-intensity sweetener.

14. Use of a product selected from the group consisting of inulin, branched inulin, linear fructo-oligosaccharides, branched fructo-oligosaccharides or a mixture thereof, with possibly a high-intensity sweetener for the preparation of reduced calorie chocolate compositions.

**Patentansprüche**

1. Schokoladenzusammensetzung mit vermindertem Kaloriengehalt, bei der der Zucker ganz oder teilweise durch ein Produkt ersetzt ist, das aus der Gruppe ausgewählt ist, die aus Inulin, verzweigtem Inulin, linearen Fructo-Oligosacchariden, verzweigten Fructo-Oligosacchariden, oder einem Gemisch davon, mit eventuell einem hochwirksamen Süßstoff besteht.

2. Schokoladenzusammensetzung mit vermindertem Kaloriengehalt, aufweisend:

(a) zwischen ungefähr 5% und ungefähr 56% eines aus Kakaoflüssigkeit oder Kakaobutter ausgewählten Kakao-Ausgangsstoffs;

(b) zwischen ungefähr 1% und ungefähr 60% eines Produkts, das aus der Gruppe ausgewählt ist, die aus linearem Inulin, verzweigtem Inulin, linearen Fructo-Oligosacchariden, verzweigten Fructo-Oligosacchariden, oder einem Gemisch davon besteht;

(c) zwischen 0% und ungefähr 55% eines Produkts, das aus der Gruppe ausgewählt ist, die aus Sucrose, Fructose, Polyolen, vorzugsweise Zuckeralkoholen, wie Sorbitol, Xylitol, Isomalt, Maltitol, Mannitol, Erythritol, Galactitol, Lactitol; Isomaltulose; Polyglucose; Polydextrose®; Polymaltose; Carboxymethylcellulose; Carboxyethylcellulose; Arabinogalactan; mikrokristalliner Cellulose, oder einem Gemisch davon besteht;

(d) zwischen 0% und ungefähr 1% eines hochwirksamen Süßstoffs und/oder Geschmackstoffs und/oder anderer vermischter Zutaten;

(e) zwischen 0% und ungefähr 65% eines unverdaulichen Schokoladen-Fettersatzstoffs.

3. Zusammensetzung gemäß Anspruch 2, wobei das Verhältnis von Inulin zu Fructo-Oligosaccharid zwischen 1/100 und 100/1, vorzugsweise 1/10 und 10/1 variieren kann.

4. Zusammensetzung gemäß Anspruch 2, wobei verzweigtes Inulin, eventuell nach einer teilweisen Hydrolyse von linearem Inulin, durch eine Levansucrase-Reaktion bei linearem Inulin in Gegenwart von Sucrose erhalten wird.

5. Zusammensetzung gemäß Anspruch 2, wobei die Fructo-Oligosaccharide durch einen chemischen oder enzymatischen Prozeß aus Saccharose, Fructose, Fructans, Levans, aus ihren Hydrolyseprodukten, oder aus Produkten, die aus Fructans enthaltenden Pflanzen gewonnen wurden, erhalten werden.

6. Zusammensetzung gemäß Anspruch 2, wobei die linearen Fructo-Oligosaccharide durch eine Fructosyltransferase-Reaktion bei Sucrose erhalten werden.

7. Zusammensetzung gemäß Anspruch 2, wobei die linearen Fructo-Oligosaccharide durch die Hydrolyse von Inulin erhalten werden.

8. Zusammensetzung gemäß Anspruch 2, wobei die linearen Fructo-Oligosaccharide aus Verbindungen gebildet sind, die weniger als insgesamt 20, vorzugsweise weniger als 9 Fructoseeinheiten haben.

9. Zusammensetzung gemäß Anspruch 2, wobei die verzweigten Fructo-Oligosaccharide gebildet sind aus einer Hauptkette, die 2 bis 15 vorzugsweise aus Fructoseeinheiten bestehende Einheiten aufweist;

an denen eine oder mehrere, verzweigte oder nicht-verzweigte Seitenketten befestigt sind.

10. Zusammensetzung gemäß Anspruch 9, wobei die Seitenketten 1 bis 15 vorzugsweise aus Fructoseeinheiten bestehende Einheiten aufweisen.

11. Zusammensetzung gemäß Anspruch 2, die für diabetische Verbraucher bestimmt ist, und 0% Sucrose aufweist.

12. Zusammensetzung gemäß Anspruch 2, die für diabetische Verbraucher bestimmt ist, wobei das Produkt, das aus der Gruppe ausgewählt ist, die aus linearem Inulin, verzweigtem Inulin, linearen Fructo-Oligosacchariden, verzweigten Fructo-Oligosacchariden oder einem Gemisch davon besteht, durch Entfernen seiner Sucrose-Fraktion gereinigt wird.

13. Prozeß zum Herstellen von Schokoladenzusammensetzungen mit vermindertem Kaloriengehalt, der darin besteht, daß übliche Zutaten für Schokolade beigemischt werden, wobei der übliche Zucker ganz oder teilweise durch ein Produkt ersetzt wird, das aus der Gruppe ausgewählt wird, die aus Inulin, verzweigtem Inulin, linearen Fructo-Oligosacchariden, verzweigten Fructo-Oligosacchariden oder einem Gemisch davon, mit eventuell einem hochwirksamen Süßstoff besteht.

14. Verwendung eines Produkts, das aus der Gruppe ausgewählt ist, die aus Inulin, verzweigtem Inulin, linearen Fructo-Oligosacchariden, verzweigten Oligosacchariden, oder einem Gemisch davon, mit eventuell einem hochwirksamen Süßstoff besteht, zur Herstellung von Schokoladenzusammensetzungen mit vermindertem Kaloriengehalt.

**Revendications**

1. Composition hypocalorique de chocolat dans laquelle le sucre est totalement ou partiellement remplacé par un produit choisi parmi le groupe constitué par l'inuline, l'inuline ramifiée, les fructo-oligosaccharides linéaires, les fructo-oligosaccharides ramifiés ou un mélange d'entre eux, avec éventuellement un édulcorant à haut pouvoir sucrant.

2. Composition hypocalorique de chocolat comprenant :

    (a) d'environ 5% à environ 56% d'une source de cacao choisie parmi la liqueur de cacao ou le beurre de cacao;
    (b) d'environ 1% à environ 60% d'un produit choisi parmi le groupe constitué par de l'inuline linéaire, de l'inuline ramifiée, des fructo-oligosaccharides linéaires, des fructo-oligosaccharides ramifiés ou un mélange d'entre eux;

    (c) de 0% à environ 55% d'un produit choisi parmi le groupe constitué par du sucrose, du fructose, des polyols, de préférence des alcools de sucre tels que du sorbitol, du xylitol, de l'isomalt, du maltitol, du mannitol, de l'érythritol, du galactitol, du lactitol, de l'isomaltulose, du polyglucose, du polydextrose, du polymaltose, du carboxyméthylcellulose, du carboxyéthylcellulose, de l'arabinogalactane, de la cellulose microcristalline ou un mélange d'entre eux;
    (d) de 0% à environ 1% d'un édulcorant à haut pouvoir sucrant et/ou un agent aromatisant et/ou d'autres ingrédients,
    (e) de 0% à environ 65% de substituts non digestibles de graisse de confiserie de chocolat.

3. Composition selon la revendication 2, dans laquelle le rapport d'inuline aux fructo-oligosaccharides peut varier entre 1/100 et 100/1, de préférence entre 1/10 et 10/1.

4. Composition selon la revendication 2, dans laquelle l'inuline ramifiée est obtenue, éventuellement après une hydrolyse partielle d'inuline linéaire, par une réaction de levansucrase sur de l'inuline linéaire, en présence de sucrose.

5. Composition selon la revendication 2, dans laquelle les fructo-oligosaccharides sont obtenus par un procédé chimique ou enzymatique à partir de saccharose, de fructose, de fructanes, de levanes, de leurs produits d'hydrolyse ou de produits obtenus à partir de plantes contenant lesdits fructanes.

6. Composition selon la revendication 2, dans laquelle les fructo-oligosaccharides linéaires sont obtenus par la réaction de fructosyl transférase sur du sucrose.

7. Composition selon la revendication 2, dans laquelle les fructo-oligosaccharides linéaires sont obtenus par l'hydrolyse d'inuline.

8. Composition selon la revendication 2, dans laquelle les fructo-oligosaccharides linéaires sont constitués par des composés ayant moins d'un total de 20, de préférence moins de 9, unités de fructose.

9. Composition selon la revendication 2, dans laquelle les fructo-oligosaccharides ramifiés sont constitués d'une chaîne principale comprenant de 2 à 15 unités, de préférence constituée d'unités de fructose; sur laquelle une ou plusieurs chaînes latérales, ramifiées ou non ramifiées, sont attachées.

10. Composition selon la revendication 9, dans laquelle les chaînes latérales comprennent de 1 à 15 unités, de préférence constituées d'unités de fructose.

**11.** Composition selon la revendication 2, destinée aux consommateurs diabétiques, comprenant 0% de sucrose.

**12.** Composition selon la revendication 2, destinée aux consommateurs diabétiques, dans laquelle le produit choisi parmi le groupe constitué par l'inuline linéaire, l'inuline ramifiée, les fructo-oligosaccharides linéaires, les fructo-oligosaccharides ramifiés ou un mélange d'entre eux, est purifié par retrait de sa fraction de sucrose.

**13.** Procédé de préparation de compositions hypocaloriques de chocolat consistant en le mélange des ingrédients usuels d'un chocolat, dans lequel le sucre usuel est totalement ou partiellement remplacé par un produit choisi parmi le groupe constitué par de l'inuline, de l'inuline ramifiée, des fructo-oligosaccharides linéaires, des fructo-oligosaccharides ramifiés ou un mélange d'entre eux, avec éventuellement un édulcorant à haut pouvoir sucrant.

**14.** Utilisation du produit choisi parmi le groupe constitué par de l'inuline, de l'inuline ramifiée, des fructo-oligosaccharides linéaires, des fructo-oligosaccharides ramifiés ou un mélange d'entre eux, avec éventuellement un édulcorant à haut pouvoir sucrant, pour la préparation de compositions hypocaloriques de chocolat.